# EUROPÄISCHE PATENTSCHRIFT

(11) **EP 2 285 925 B1**
(45) Veröffentlichungstag und Bekanntmachung des Hinweises auf die Patenterteilung: **29.05.2013**
(21) Anmeldenummer: 09753960.5
(22) Anmeldetag: 29.05.2009
(51) Int. Cl.: C09J 7/00

(54) **KLEBEBAND MIT VISKOELASTISCHEM POLYOLEFINTRÄGER**
ADHESIVE TAPE WITH A VISCOELASTIC POLYOLEFIN BACKING
RUBAN ADHÉSIF COMPORTANT UN SUPPORT POLYOLÉFINIQUE VISCOÉLASTIQUE

(30) Priorität: 30.05.2008 DE 102008025983
(43) Veröffentlichungstag der Anmeldung: 23.02.2011
(73) Patentinhaber: TESA SE, 20253 Hamburg (DE)
(72) Erfinder: HANSEN, Sven, 22765 Hamburg (DE); MÜSSIG, Bernhard, 21218 Seevetal (DE); SEITZER, Dennis, 22335 Hamburg (DE)
(86) Internationale Anmeldenummer: PCT/EP2009/056629
(87) Internationale Veröffentlichungsnummer: WO 2009/144305

(56) Entgegenhaltungen:
- EP-A- 0 569 921
- EP-A- 1 154 002
- WO-A-96/25453
- WO-A-99/14281
- WO-A-2004/028709
- DE-A1- 3 213 246
- DE-A1- 10 203 603
- DATABASE WPI Week 199318 Thomson Scientific, London, GB; AN 1993-146263 XP002541198 & JP 05 078625 A (SEKISUI CHEM IND CO LTD) 30. März 1993 (1993-03-30)
- DATABASE WPI Week 198122 Thomson Scientific, London, GB; AN 1981-39491D XP002541199 & SU 761 535 B (SHARAI M T) 10. September 1980 (1980-09-10)

## Beschreibung

Die Erfindung betrifft ein Klebeband mit einem viskoelastischen Träger aus einem speziellen Olefinpolymer und die Verwendung desselben für doppelseitig sehr stark klebende Klebebänder.

Für industrielle Haftklebeband-Anwendungen werden sehr häufig doppelseitig klebende Haftklebebänder eingesetzt, um zwei Materialen miteinander zu verbinden. Man unterscheidet hierbei je nach Typ einschichtige, doppelseitig klebende Selbstklebebänder und mehrschichtige doppelseitig klebende Selbstklebebänder.

Einschichtige doppelseitig klebende Selbstklebebänder, so genannte Transfertapes, sind so aufgebaut, dass die die einzige Schicht bildende Haftklebeschicht keinen Träger enthält und nur mit entsprechenden Trennmaterialien, zum Beispiel silikonisierten Trennpapieren oder Trennfolien, abgedeckt ist. Transfertapes können einseitig oder beidseitig mit Trennmaterialen abgedeckt sein. Oft werden beidseitig unterschiedlich stark silikonisierte Trennpapiere oder -folien verwendet, damit das Transfertape problemlos zur Rolle gewickelt werden kann und anschließend auch problemlos appliziert werden kann. Transferklebebänder werden häufig verwendet, um die unterschiedlichsten Substrate haftklebrig auszurüsten. Dies geschieht zum Beispiel durch Aufkaschieren des Transfertapes auf das Substrat. Das Trennpapier verbleibt dann als Abdeckung der Haftklebeschicht im Produkt.

Dünnere Transfertapes werden oft mit Selbstklebemassen aus Lösung hergestellt, dickere Transfertapes mit Selbstklebemassen aus Schmelze oder durch die so genannte UV-Polymerisation. Hierbei wird ein vorpolymerisierter Sirup aus Acrylatmonomeren zwischen zwei UV-durchlässigen, antiadhäsiv beschichteten Trennfolien beschichtet und auf der Bahn durch UV-Bestrahlung vernetzt. Beispielhaft seien die Schriften US 4,181,752 A1, EP 0 084 220 A, EP 0 202 938 A, EP 0 277 426 A und US 4,330,590 A1 erwähnt. Nachteilig an dieser Technologie ist der oft hohe Restmonomeranteil in den Selbstklebemassen. Dieser ist für viele Anwendungen nicht akzeptabel. Transfertapes, die mit UV-undurchlässigen Zuschlagstoffen gefüllt sind, können auf diese Weise nicht hergestellt werden.

Die DE 43 03 183 A1 beschreibt ein Verfahren zur Herstellung von dicken Haftklebeschichten, insbesondere für die Herstellung von selbstklebenden Hochleistungsklebstoffartikeln. Dabei wird ein mittels UV-Strahlen zu polymerisierendes Gemisch von Ausgangsmonomeren mit einem lösemittelfreien, gesättigten photopolymerisationsfähigen Polymerisat vermischt und dabei verdickt, woraufhin dieses Gemisch auf einen dehäsiv ausgerüsteten Träger aufgebracht und mit UV-Strahlen bestrahlt wird. Nachteilig ist die Verwendung von einpolymerisierten oder zugesetzten Photoinitiatoren, da die Schichten vergilben können und bei UV-Exposition vor der Verwendung eine oft deutliche Veränderung der klebtechnischen Eigenschaften festzustellen ist. Dann muss - beispielsweise durch UV-undurchlässige Verpackungen - erheblicher Aufwand betrieben werden, damit der Kunde eine gleichmäßig hohe Verklebungsleistung bekommt. Zudem besteht die Gefahr bei Verklebung auf UVtransparenten Untergründen, zum Beispiel auf Fensterglas oder transparenten Kunststoffoberflächen, dass photoinitiatorhaltige Schichten nachvernetzen. Damit steigt zwar zunächst die Verklebungsfestigkeit an, aber dann verlacken und verspröden die Schichten durch weitere Vernetzung. Dies führt über kurz oder lang zum Versagen der Verklebung insbesondere unter Scherbelastung.

Transfertapes können geschäumt oder gefüllt sein, um die Eigenschaften zu verbessern, insbesondere zum Beispiel im Hinblick auf die Verklebung gegenüber unebenen Substraten. Die DE 40 29 896 A1 beschreibt ein trägerloses, beidseitig klebendes Selbstklebeband aus einer druckempfindlichen Klebstoffschicht von mehr als 200 µm Dicke, enthaltend Glasmikrovollkugeln von mehr als 1,5 g/cm³ Dichte. Dieses soll eine besonders gute Haftung aufweisen. Nachteilig ist die hohe Dichte durch die verwendeten Glaskugeln.

Mehrschichtig aufgebaute doppelseitig klebende Klebebänder haben Vorteile gegenüber den einschichtig aufgebauten, da durch die Variation der einzelnen Schichten spezifische Eigenschaften eingestellt werden können. So kann ein dreischichtig aufgebautes Klebeband, bestehend aus einer Träger-Mittelschicht und zwei Deckschichten, symmetrisch oder asymmetrisch aufgebaut sein. Die beiden Deckschichten können jeweils Haftklebeschichten sein oder beispielsweise die eine Schicht eine Haftklebeschicht und die andere Schicht ein hitzeaktivierbarer Klebstoff. Der Träger, also die Mittelschicht, kann beispielsweise eine Folie, ein Gewebe, ein "Non-woven"-Material (Vlies) oder ein Schaumfolienträger sein. Schäume oder schaumartige Träger werden oft verwendet, wenn eine hohe Verklebungsfestigkeit auf unebenen Oberflächen gefordert ist oder wenn Abstände ausgeglichen werden sollen.

So werden für Montageklebebänder oft geschlossenzellige Schaumträger auf Basis von PE (Polyethylen), PU (Polyurethan) oder EVA (Ethylvinylacetat), die doppelseitig klebend mit Synthesekautschuk- oder Acrylathaftkleber ausgerüstet sind, verwendet. Anwendungen für diese Bänder sind beispielsweise die Verklebung von Spiegeln, von Zierleisten und Emblemen im Fahrzeugbau, weitere Verwendungen im Automobilbau, ferner die Verwendung in der Möbelindustrie oder in Haushaltsgeräten.

Montagebänder für den Außenbereich besitzen in der Regel Haftklebemassen auf Basis von Polyacrylat. Dieses Material ist besonders witterungsbeständig und sehr langlebig, nahezu inert gegen UV-Licht und gegen den Abbau durch Oxidation beziehungsweise Ozonolyse.
Bekannt sind auch Montageklebebänder mit Mittelschichten aus Kautschuk, Styrolblockcopolymeren und Polyurethan. Alle diese Materialien besitzen nicht die guten Alterungs-und Wärmebeständigkeitseigenschaften wie Polyacrylat. Systeme auf Basis von Acrylatblockcopolymeren sind zwar alterungsbeständig, jedoch nicht wärmebeständig genug für Hochleistungsanforderungen, da diese Systeme nur physikalisch über Styrol oder Methylmethacrylat-Domänen vernetzt sind. Die Haftklebemassen erweichen beim Erreichen der Erweichungstemperatur der Domänen (wie bei Styrolblockcopolymeren). Als Folge versagt die Verklebung.

Nachteilig an gewöhnlichen Schaumklebebändern ist auch, dass sie leicht spalten können. Wird beispielsweise PE-Schaum verwendet, dann erweicht dieses Material bei Erwärmung auf etwa 100 °C und die Verklebung versagt. Derartige doppelseitig klebende Montagebänder sind für hochwertige Anwendungen ungeeignet.

Schäume auf Basis von PU sind zwar temperaturbeständiger, sie neigen jedoch zum Vergilben unter UV- und Sonnenlichtbestrahlung. Auch sie sind für Hochleistungsanforderungen oft ungeeignet.

Seit einigen Jahren sind dreischichtig aufgebaute doppelseitig klebende Klebebänder mit Acrylatkern erhältlich. Dieser viskoelastische Acrylatkern ist dabei schaumartig. Die schaumartige Struktur wird dabei erreicht durch die Beimischung von Glas- oder Polymerhohlkugeln in die Acrylatmasse, oder die Acrylatmasse wird geschäumt mittels expandierbarer polymerer Mikroballons. Angrenzend an diese viskoelastische Schicht sind jeweils Haftklebemassen vorgesehen, in den meisten Fällen ebenfalls basierend auf Acrylat, selten auf Synthesekautschuk oder in speziellen Fällen auch auf hitzeaktivierbaren Klebeschichten. Die Vorteile des viskoelastichen Acrylatkerns ergeben sich zum einen aus den Materialeigenschaften des Polyacrylats (wie bereits erwähnt sind dies eine besondere Witterungsbeständigkeit und Langlebigkeit und weitgehend inertes Verhalten gegen UV-Licht und gegen den Abbau durch Oxidation beziehungsweise Ozonolyse). Durch die Gestaltung der Acrylatkernschicht, beispielsweise bestimmt durch die Comonomerzusammensetzung, Art und Anteil bestimmter Füllstoffe sowie den Vernetzungsgrad, sind diese Produkte besonders gut zum Verkleben von Gegenständen auf Substraten mit unebenen Untergründen geeignet. Je nach Wahl des Haftklebers lässt sich ein breites Spektrum an Eigenschaften und Verklebungsfestigkeiten abdecken.

Allerdings haben die vorgenannten Systeme, bedingt durch ihren Herstellprozess, entscheidende Nachteile. Die viskoelastische Acrylatkernschicht wird durch einen Prozess der zweistufigen UV-Polymerisation hergestellt. Bei diesem Prozess wird im ersten Schritt ein Gemisch auf Basis von Acrylatmonomeren, beispielsweise 10 Gew.-% Acrylsäure und 90 Gew.-% Isooctylacrylat, in Gegenwart einen Photoinitiators durch UV-Bestrahlung in einem Reaktor bis zu etwa 10 bis 20 % Umsatz vorpolymerisiert. Alternativ kann dieser "Acrylic-Syrup" auch durch thermisch initiierte freie radikalische Polymerisation gewonnen werden. Im zweiten Schritt wird dieser Acrylic-Syrup, nachdem oft noch weiterer Photoinitiator, Füllstoffe, Glashohlkugeln und Vernetzer zugesetzt wurden, zwischen antiadhäsiv beschichteten UV-durchlässigen Folien beschichtet und mittels erneuter UV-Bestrahlung auf der Bahn zu höherem Umsatz polymerisiert und dabei gleichzeitig vernetzt. Das fertige dreischichtige Produkt erhält man beispielsweise nach Zukaschieren der Haftklebeschichten.

Insbesondere die Herstellung "dickerer" viskoelastischer Schichten muss in vielen Fällen unter Sauerstoffausschluss durchgeführt werden. Die Masse wird dann durch Abdeckung mit Folienmaterial geschützt und eine UV-Initiierung durch die Folien hindurch bewirkt. PE- und PP-Folien, die für diesen Zweck zum Teil eingesetzt werden, verformen sich unter den Vernetzungs-Reaktionsbedingungen (bei der UV-iniitierten Polymerisation wird Reaktionswärme frei, die die nicht-temperaturbeständige Folie verformen kann) und sind daher schlecht geeignet. UV-durchlässige Folien wie PET sind wärmebeständiger; allerdings muss hier ein langwellig reagierender Photoinitiator in die Masse gegeben werden, damit die Reaktion stattfindet. Daher neigen diese Schichten zur Nachvernetzung unter UV- oder Sonnenlicht. Dadurch geht der materialspezifische Vorteil des Polyacrylat durch dieses Verfahren verloren. Nachteilig ist zudem, dass UVuntransparente Füllstoffe nicht verwendet werden können. Auch bleibt verfahrensbedingt ein hoher Restmonomeranteil in diesen Produkten. Eine mögliche Restmonomerreduzierung durch Reduktion der Beschichtungsgeschwindigkeit oder durch intensive Nachtrocknung ist wenig wirtschaftlich. Die maximal erreichbare Schichtdicke ist sehr stark abhängig von der Wellenlänge des verwendeten Photoinitiators. Herstellbar sich Schichten bis etwas 1 mm, allerdings mit den oben genannten Nachteilen. Noch dickere Schichten lassen sich praktisch nicht mehr gewinnen.

Besonders nachteilig bei Acrylatschichten, die durch zweistufige UV-Polymerisation, UV-Vernetzung oder durch Elektronenbestrahlung hergestellt werden, ist ein mehr oder weniger stark ausgeprägtes Vernetzungsprofil durch die Schicht hindurch. Zur Bestrahlungsquelle hin ist die UV-vernetzte Schicht immer stärker vernetzt als auf der der UV-Strahlungsquelle gegenüberliegenden Seite. Der Grad des Vernetzungsprofils ist zum Beispiel abhängig von der Schichtdicke, der Wellenlänge des verwendeten Photoinitiators und auch der Wellenlänge der emittierten Strahlung der UV-Strahlungsquelle.

In den Schriften DE 198 46 902 A1 und DE 101 63 545 A1 wird vorgeschlagen, durch beidseitige Elektronen- beziehungsweise UV-Bestrahlung das resultierende Vernetzungsprofil zu verringern und besonderes dicke UV-vernetzbare Acrylathaftklebeschichten nahezu homogen zu vernetzen. Allerdings weisen auch diese so hergestellten Schichten immer noch ein Vernetzungsprofi auf, und zudem ist das Verfahren sehr aufwändig. Weiterhin wäre es zur Herstellung viskoelastischer Acrylatträger kaum nutzbar, sondern beschreibt vor allem die Präparation von Haftklebeschichten.

Nachteilig an viskoelastischen Acrylatträgern, die ein Vernetzungsprofil durch die Schicht hindurch aufweisen, ist ihre ungenügende Fähigkeit, Spannungen gleichmäßig zu verteilen. Eine Seite ist immer entweder über- oder untervernetzt. Eine exakte Balance zwischen adhäsiven und kohäsiven Eigenschaften ist nie für die gesamte Schicht, sondern nur für einen kleinen Ausschnitt einstellbar.

Dicke unvemetzte Acrylatträger können extrudiert werden. Wenn man dabei Vernetzungsmittel zugibt, um einen vernetzten Acrylatträger herzustellen, ist der Prozess sehr schwierig, denn während der Extrusion darf die Vernetzung nicht stattfinden, und am Ende des Prozesses wird erwartet, dass der viskoelastische Acrylatträger vernetzt ist.

Dicke Acrylatträger sind nur sehr bedingt UV-durchlässig, insbesondere UV-vemetzte (wegen des absorbierenden Photoinitiators). Daher ist es nicht möglich, mit einer einseitigen UV-Bestrahlung beide Klebmasseschichten gleichzeitig und gleich stark zu vernetzen.

Die WO 2004/028709 A2 betrifft gemäß Anspruch 1 einen nichtklebenden, harzfreien Polyolefinträger, auf den eine Klebemasse aus beispielsweise Acrylat aufgebracht wird.

Die DE 102 03 603 A1 zeigt eine Haftfolie aus einem Olefincopolymer, das mit Harzen abgemischt sein kann.
Weder ist die Dichte des Olefincopolymers genannt, noch der Harzanteil näher spezifiziert.

Die EP 1 154 002 A1 betrifft einen nichtklebenden, harzfreien Polyolefinträger, auf den eine Klebemasse aus beispielsweise Acrylat aufgebracht wird

Die WO 99/14281 A1 betrifft einen Releaseliner aus einer nichtklebenden Polyolefinfolie und keinen klebendenden Träger.

Die WO 96/25453 A1 offenbart einen haftklebrigen harzfreien Film aus Polyolefinen. Die Dichte des Olefinpolymers Ist nicht genannt.

Der Abstract der JP 05 078 625 A, die EP 0 569 921 A und die DE 32 13 246 A betreffen einen nichtklebenden, harzfreien Polyolefinträger, auf den eine Klebemasse aus beispielsweise Acrylat aufgebracht wird.

Der Abstract der SU 61535 beschreibt eine Klebemasse, die Styrol basierte Polymere enthält. Weder ist die Dichte des Olefinpolymers genannt, noch der Harzanteil näher spezifiziert.

Aufgabe der Erfindung ist daher, ein Klebeband zur Verfügung zu stellen, welches die erwähnten Nachteile nicht aufweist und welches sich durch mindestens so gute klebtechnische Eigenschaften auszeichnet und insbesondere als Montageklebeband genutzt werden kann. Darüber hinaus soll der viskoelastische Träger in dem Klebeband lösungsmittelfrei herstellbar und UV- und thermoalterungsstabil sein.

Die Aufgabe wird durch ein Klebeband mit einem viskoelastischen Träger auf Polyolefinbasis gelöst, wie es im Hauptanspruch niedergelegt ist. Vorteilhafte Weiterbildungen des Erfindungsgegenstands sowie Verwendungen des Klebebands finden sich in den Unteransprüchen

Demgemäß betrifft die Erfindung ein Klebeband mit einem Träger aus einem speziellen Olefinpolymer und aus einem Klebharz, wobei der Anteil 130 bis 350 phr beträgt, und optional mit einer oder zwei Klebemassen als Außenschicht auf dem Träger, wobel das Olefinpolymer eine Dichte zwischen 0,86 und 0,89 g/cm³ und einen Kristallitschmelzpunkt von mindestens 105 °C aufweist und das Olefinpolymer Propylen oder Ethylen und mindestens ein weiteres Comonomer enthält, ausgewählt aus den C₂- bis C₁₀-Olefinen.

Dem Fachmann galten Olefinpolymere für viskoelastische Träger wegen der Härte oder des zu niedrigen Schmelzpunktes der Rohstoffe als nicht geeignet, daher werden solche Träger bisher aus weichen Acrylatpolymeren massiv oder geschäumt hergestellt. Beispielsweise als Träger in einem Montageklebeband sind viskoelastische Eigenschaften ähnlich denen von hochwertigen Haftklebemassen gefordert. Dennoch können überraschenderweise aus Olefinpolymeren mit einer Dichte zwischen 0.86 und 0,89 g/cm³, vorzugsweise zwischen 0,86 und 0,88 g/cm³, besonders bevorzugt zwischen 0,86 und 0,87 g/cm³, und einem Kristallitschmelzpunkt von mindestens 105 °C, vorzugsweise mindestens 115 °C, besonders bevorzugt mindestens 135 °C und einem Klebharz funktionierende viskoelastische Träger gewonnen werden.

Das erfindungsgemäße Olefinpolymer weist vorzugsweise einen Schmelzindex von weniger als 8 g/10 min, besonders bevorzugt weniger als 1,5 g/10 min auf. Der Biegemodul des Olefinpolymers beträgt vorzugsweise weniger als 50 MPa, besonders bevorzugt weniger als 26 MPa und insbesondere weniger als 17 MPa.

Das Polypropylenharz kann auf verschiedene Weise aufgebaut worden sein zum Beispiel als Blodccopolymer, als Pfropfpolymer oder als so genannter Reaktorblend wie bel heterophasischen Polyolefinen (zum Beispiel Impact-Polypropylen, auch - nicht ganz richtig, aber üblich - Polypropylenblockcopolymer genannt).

Das Olefinpolymer enthält Ethylen oder Propylen und mindestens ein weiteres Comonomer ausgewählt aus den C₂- bis C₁₀-Olefinen, bevorzugt C₂- bis C₁₀-α-Olefinen. Besonders geeignet sind Copolymere aus Propylen und Ethylen, Propylen und Buten-(1) und Ethylen und Octen-(1) sowie Terpolymere aus Ethylen, Propylen und Buten-(1).

Die Dichte des Olefinpolymers wird nach ISO 1183 ermittelt und in g/cm³ ausgedrückt. Der Schmelzindex wird nach ISO 1133 mit 2,16 kg geprüft und in g/10 min ausgedrückt. Die Prüftemperatur beträgt, wie es dem Fachmann geläufig ist, bei propylenbasierten Polyolefinen 230 °C und ethylenbasierten Polymeren 190 °C Der Biegemodul (flexural modulus) ist nach ASTM D 790 (Sekantenmodul bei 2 % Dehnung) zu bestimmen. Der Kristallitschmelzpunkt (T_{cr}) und die Schmelzwärme werden mit DSC (Mettler DSC 822) bei einer Aufheizrate von 10 °C/min nach ISO 3146 ermittelt. Beim Auftreten mehrerer Schmelzpeaks wird der mit der höchsten Temperatur gewählt, weil nur Schmelzpeaks oberhalb von 100 °C in Trägerformulierungen erhalten bleiben und wirksam werden, wohingegen Schmelzpeaks erheblich unter 100 °C nicht erhalten bleiben und keine Auswirkung auf die Produkteigenschaften haben. Die Schmelzwärme bestimmt einerseits die Klebkraft und Tack der Formulierung und andererseits die Scherfestigkeit insbesondere in der Wärme (also 70 °C und darüber). Die Schmelzwärme des Polyolefins ist daher für den optimalen Kompromiss der klebtechnischen Eigenschaften von Bedeutung, sie liegt vorzugsweise zwischen 3 und 18 J/g, besonders bevorzugt zwischen 5 und 15 J/g.
Die Schmelzwärme des Trägers ist daher ebenfalls für den optimalen Kompromiss der klebtechnischen Eigenschaften von Bedeutung, sie liegt vorzugsweise zwischen 1 und 6 J/g, besonders bevorzugt zwischen 2 und 5 J/g.

Das erfindungsgemäße Olefinpolymer kann mit Elastomeren wie Naturkautschuk oder Synthesekautschuken kombiniert werden. Vorzugsweise werden ungesättigte Elastomere wie Naturkautschuk, SBR, NBR oder ungesättigte Styrolblockcopolymere nur in geringen Mengen oder besonders bevorzugt gar nicht verwendet. In der Hauptkette gesättigte Synthesekautschuke wie Polyisobutylen, Butylkautschuk, EPM, HNBR, EPDM oder hydrierte Styrolblockcopolymere werden für den Fall einer gewünschten Modifikation bevorzugt.

Überraschenderweise weist der Träger ein besseres mechanisches Verhalten auf, wenn er ein Klebharz enthält.
Die Polydispersität ist das Verhältnis von Gewichtsmittel zu Zahlenmittel der Molmassenverteilung und kann durch Gelpermeationschromatographie ermittelt werden, sie spielt für die Eigenschaften eine wichtige Rolle. Als Klebharz werden daher solche mit einer Polydispersität von weniger als 2,1, vorzugsweise weniger als 1,8, besonders bevorzugt weniger als 1,6 eingesetzt. Der höchste Tack ist mit Harzen mit einer Polydispersität von 1,0 bis 1,4 zu erreichen.

Als Klebharz hat sich herausgestellt, dass Harze auf Basis von Kolophonium (zum Beispiel Balsamharz) oder Kolophoniumderivaten (zum Beispiel disproportioniertes, dimerisiertes oder verestertes Kolophonium), vorzugsweise partiell oder vollständig hydriert, gut geeignet sind. Sie weisen von allen Klebharzen den höchsten Tack (Klebrigkeit, Anfassvermögen) auf. Vermutlich liegt das an der geringen Polydispersität von 1,0 bis 1,2. Terpenphenolharze zeichnen sich wie die hydrierten Harze durch eine besonders hohe Alterungsbeständigkeit aus.

Bevorzugt werden ebenfalls Kohlenwasserstoffharze, die vermutlich aufgrund Ihrer Polarität gut verträglich sind. Dies sind zum Beispiel aromatische Harze wie Cumaron-Inden-Harze oder Harze auf Basis Styrol oder α-Methylstyrol oder cycloaliphatischer Kohlenwasserstoffharze aus der Polymerisation von C₅-Monomeren wie Piperylen aus C₅- oder C₉-Fraktionen von Crackern oder Terpenen wie ß-Pinen oder δ-Limonen oder Kombinationen hiervon, vorzugsweise partiell oder vollständig hydriert, und Kohlenwasserstoffharze gewonnen durch Hydrierung von aromatenhaltigen Kohlenwasserstoffharzen oder Cyclopentadien-Polymeren.
Weiterhin können Harze auf Basis von Polyterpenen, vorzugsweise partiell oder vollständig hydriert und/oder Terpenphenolharze zur Verwendung kommen.

Die Menge an Klebharz beträgt 130 bis 350 phr, bevorzugt 200 bis 240 phr (phr bedeutet Gewichtsteile bezogen auf 100 Gewichtsteile Resin beziehungsweise Rubber, das heißt hier Olefinpolymer).

Der Träger kann zur Einstellung der gewünschten viskosen Eigenschaften einen flüssigen Weichmacher wie beispielsweise aliphatische (paraffinische oder verzweigte), cycloaliphatische (naphthenische) und aromatische Mineralöle, Ester der Phthal-, Trimellit-, Zitronen- oder Adipinsäure, Wollwachs, flüssige Kautschuke (zum Beispiel niedermolekulare Nitril-, Butadien- oder Polyisoprenkautschuke), flüssige Polymerisate aus Isobutenhomopolymer und/oder Isobuten-Buten-Copolymer, Flüssig- und Weichharze mit einem Schmelzpunkt unter 40 °C auf Basis der Rohstoffe von Klebharzen, insbesondere der oben aufgeführten Klassen an Klebharz, enthalten. Besonders bevorzugt werden davon flüssige Polymerisate aus Isobuten und/oder Buten und Ester der Phthal-. Trimellit-, Zitronen- oder Adipinsäure insbesondere deren Ester von verzweigten Octanolen und Nonanolen.

Anstelle eines flüssigen Weichmachers kann auch ein sehr weiches und kaum kristallirtes Olefinpolymer verwendet werden. Dieses ist vorzugsweise ein elastomeres Homopolymer aus Isobuten (zum Beispiel Oppanol), ein Copolymer aus Ethylen, Propylen, Buten-(1), Hexen-(1) und/oder Octen-(1), die zum Beispiel unter den Handelsnamen Exact®, Engage®, Versify® oder Tafmer® bekannt sind, oder ein Terpolymer aus Ethylen, Propylen, Buten-(1), Hexen-(1) und/oder Octen-(1), wobei der Biegemodul vorzugsweise unter 20 MPa, der Kristallitschmelzpunkt vorzugsweise unter 50 °C und die Dichte vorzugsweise zwischen 0,86 und 0,87 g/cm³ liegen. Weitere bevorzugte Olefinpolymere sind EPDM, also Terpolymere aus Ethylen und Propylen und einem Dien wie Ethylidennorbornen, vorzugsweise mit einem Ethylengehalt von 40 bis 70 Gew.-%, einer Mooney-Viskosität (Bedingungen 1+4, 125 °C) unter 50 und/oder einer Dichte unter 0,88 g/cm³, besonders bevorzugt unter 0,87 g/cm³. Da solche Olefinpolymere zwar sehr weich - verglichen mit einem flüssigen Weichmacher - sind, sollte die Menge im Verhältnis zum erfindungsgemäßen Olefinpolymer sehr hoch sein, also deutlich über 100 phr.

Besonders bevorzugt wird ein Klebeband mit einem viskoelastischen Träger ohne migrationsfähige Weichmacher.

Dem Schmelzpunkt des Klebharzes (Bestimmung nach DIN ISO 4625) kommt ebenfalls eine Bedeutung zu. Üblicherweise steigt die Klebkraft einer Kautschukmasse (auf Basis Natur- oder Synthesekautschuk) mit dem Schmelzpunkt des Klebharzes an. Bei dem erfindungsgemäßen Olefinpolymer scheint sich das umgekehrt zu verhalten. Klebharze mit hohem Schmelzpunkt von 115 °C bis 140 °C sind deutlich ungünstiger als solche mit Schmelzpunkt unter 105 °C, welche bevorzugt werden. Harze mit einem Schmelzpunkt von unter 85 °C sind wenig im Handel erhältlich, da die Flakes oder Pastillen bei Transport und Lagerung zusammenbacken. Daher wird erfindungsgemäß vorzugsweise ein gängiges Klebharz (zum Beispiel mit einem Schmelzpunkt aus dem Bereich 85 °C bis 105 °C) mit einem Weichmacher kombiniert, um faktisch den Harzschmelzpunkt zu senken. Der Mischschmelzpunkt wird an einer homogenisierten Mischung aus Klebharz und Weichmacher ermittelt, wobei die beiden Komponenten im gleichen Verhältnis vorliegen wie in dem Träger. Er liegt vorzugsweise im Bereich von 45 °C bis 95 °C.

Konventionelle Schichten auf Basis Naturkautschuk oder ungesättigten Styrolblockcopolymeren als Elastomerkomponente enthalten üblicherweise ein phenolisches Antioxidans zur Vermeidung des oxidativen Abbaus dieser Elastomerkomponente mit Doppelbindungen in der Polymerkette. Die erfindungsgemäße Trägerschicht enthält jedoch ein Olefinpolymer ohne oxidationsempfindliche Doppelbindungen und könnte daher ohne Antioxidans auskommen. Für eine hohe Langzeitstabilität werden daher vorzugsweise ein primäres Antioxidans und besonders bevorzugt auch ein sekundäres Antioxidans verwendet. Die Träger enthalten in den bevorzugten Ausführungsformen mindestens 2 phr, besonders bevorzugt 6 phr primäres Antioxidans oder vorzugsweise mindestens 2 phr, insbesondere mindestens 6 phr einer Kombination aus primären und sekundären Antioxidans, wobei die primäre und sekundäre Antioxidansfunktion nicht in verschiedenen Molekülen vorliegen müssen, sondern auch in einem Molekül vereinigt sein können. Die Menge an sekundärem Antioxidans beträgt bevorzugt bis 5 phr, besonders bevorzugt 0,5 bis 1 phr. Überraschend wurde gefunden, dass eine Kombination von primären Antioxidantien (zum Beispiel sterisch gehindertes Phenol oder C-Radikalfänger wie CAS 181314-48-7) und sekundären Antioxidantien (zum Beispiel Schwefelverbindungen, Phosphite oder sterisch gehinderte Amine) eine verbesserte Verträglichkeit ergibt. Vor allem wird die Kombination von einem primären Antioxidans, vorzugsweise sterisch gehindertes Phenol mit einer relativen Molmasse von mehr als 500 Dalton, mit einem sekundären Antioxidans aus der Klasse der Schwefelverbindungen oder aus der Klasse der Phosphite, bevorzugt mit einer relativen Molmasse von mehr als 500 Dalton, bevorzugt, wobei die phenolische, die schwefelhaltige und die phosphitische Funktionen nicht in drei verschiedenen Molekülen vorliegen müssen, sondern auch mehr als eine Funktion in einem Molekül vereinigt sein können.

Bei Anwendungen bei denen das Klebeband längere Zeit die dem Licht (zum Beispiel der Sonneneinstrahlung) ausgesetzt sind wird vorzugsweise ein Lichtschutzmittel, besonders bevorzugt ein HALS wie Tinuvin 111, ein UV-Absorber wie Tinuvin P oder deckendes Pigment eingesetzt.

Zur Optimierung der Eigenschaften kann der zum Einsatz kommende viskoelastische Träger mit weiteren Additiven wie Füllstoffen, Fasern, Flammschutzmitteln, Pigmenten, Farbstoffen, Antiozonantien, Photoinitiatoren, Leitfähigkeitsadditiven, ferromagnetische Additiven, Flammschutz- oder Vernetzungsmitteln oder Vernetzungspromotoren und insbesondere Treibmitteln zur Schäumung abgemischt sein. Geeignete Füllstoffe und Pigmente sind beispielsweise Ruß, Titandioxid, Holzmehl, Calciumcarbonat, Zinkcarbonat, Zinkoxid, Silicate oder Kieselsäure. Bevorzugte Füllstoffe sind Voll- oder Hohlkugeln aus Glas oder Polymeren und mit Gas expandierbare Mikroballons, vorzugsweise in einer Menge von 2 bis 6 Gew.-% bezogen auf die gesamte Trägerrezeptur.

Weiterhin sind Träger möglich, in denen auf Weichmacher oder sonstige Additive oder Zusätze verzichtet wird.

Die Herstellung und Verarbeitung des viskoelastischen Trägers kann aus Lösung sowie aus der Schmelze erfolgen. Bevorzugte Herstell- und Verarbeitungsverfahren erfolgen aus der Schmelze. Für den letzteren Fall umfassen geeignete Herstellprozesse sowohl Batchverfahren als auch kontinuierliche Verfahren. Besonders bevorzugt ist die kontinuierliche Fertigung des viskoelastischen Trägers mit Hilfe eines Extruders oder Kneters und anschließender Beschichtung auf einen Prozessliner oder einem im Produkt verbleibenden Liner mit oder ohne dem zusätzlichen Aufbringen einer Klebmasse. Als Beschichtungsverfahren werden Extrusionsbeschichtung mit Breitschlitzdüsen und Kalanderbeschichtung bevorzugt.

Das Klebeband ist vorzugsweise ein- oder beidseitig mit einem Liner abgedeckt. Der Liner für das Produkt oder der Prozessliner sind zum Beispiel ein Trennpapier oder eine Trennfolie, vorzugsweise mit einer Releasebeschichtung. Als Träger des Liners kommen zum Beispiel Folien aus Polyester oder Polypropylen oder kalandrierte Papiere mit oder ohne Dispersions- oder Thermosplastbeschichtung in Frage.

Der viskoelastische Träger weist vorzugsweise eine Dicke zwischen 100 und 5000 µm, besonders bevorzugt zwischen 500 und 3000 µm und ganz besonders bevorzugt zwischen 800 und 1200 µm auf.

Der Probe Tack des Klebebandes beträgt vorzugsweise mindestens 2 N, besonders bevorzugt mindestens 4 N, ganz besonders bevorzugt mindestens 5 N.

Der Wert des L-Jig-Testes auf Polyethylen beträgt vorzugsweise mindestens 100 N/25 mm, besonders bevorzugt mindestens 200 N/25 mm.

Die Klebkraft 90° auf Polyethylen beträgt vorzugsweise mindestens 5 N/cm, besonders bevorzugt mindestens 10 N/cm, ganz besonders bevorzugt mindestens 15 N/cm.

Die Klebkraft 90° auf Stahl beträgt vorzugsweise mindestens 20 N/cm, besonders bevorzugt mindestens 30 N/cm, ganz besonders bevorzugt mindestens 50 N/cm.

Das Klebeband mit dem erfindungsgemäßen viskoelastischen Träger ist den bekannten Produkten in Bezug auf klebtechnische Eigenschaften erheblich überlegen, und zwar nicht nur auf Polyethylen sondern sogar auf Stahl, wie die Beispiele bezeugen.

In Abhängigkeit von der Glastemperatur des Olefinpolymers und der Rezepturgestaltung können Träger für stark klebende Produkte mit einer Glastemperatur (gemessen mit DMA bei 10 rads/s) von -20 °C bis -50 °C erhalten werden, vorzugsweise liegt die Glastemperatur unter -20 °C, besonders bevorzugt unter -35 °C um ein gutes Klebverhalten in der Kälte zu erreichen. Bekannte viskoelastische Träger aus Acrylat weisen Glastemperaturen im Bereich von +5 °C bis -15 °C auf, daraus gefertigte Klebebänder sind also bei niedrigen Temperaturen schwer zu verkleben, und die Verklebung ist bei sehr tiefen Temperaturen sogar schlagempfindlich.

Der viskoelastische Träger muss im Gegensatz zu den bisher üblichen Acylatträgern nicht vernetzt werden, da unterhalb des Kristallitschmelzpunktes des Olefinpolymers eine physikalische Vernetzung vorliegt. Daher gibt es im Gegensatz zu strahlenvernetzten Trägern keine Dickenbegrenzung nach oben. Für Anwendungsfälle bei sehr hohen Temperaturen kann der Träger jedoch auch mit Strahlen wie Gamma- oder bevorzugt Elektronenstrahlen vernetzt werden, wobei die Spannung vorzugsweise mindestens 250 kV und die Dosis vorzugsweise mindestens 20 kGy, besonders bevorzugt mindestens 50 kGy beträgt.

Die Oberfläche(n) des Trägers können vor der Beschichtung mit einer Klebmasse chemisch oder physikalisch vorbehandelt sein, also zum Beispiel mit einem Primer (Haftvermittler) bedeckt oder einer Coronabehandlung unterzogen sein. Eine bevorzugte Ausführungsform des erfindungsgemäßen Gegenstandes weist an einer, vorzugsweise an beiden Oberflächen eine Barriereschicht (Sperrschicht) auf, um Migration von Komponenten des Trägers und/oder der Klebmasse zu unterbinden, Beispiele hierfür sind Beschichtungen aus Epoxidharzen mit Härtern wie Polyment NK 380 oder Polyamiden oder die Kaschierung mit dünnen Folien zum Beispiel aus Metall, Polyester oder Acrylnitrilcopolymer (zum Beispiel Barex).

Das Klebeband wird dadurch gebildet, dass auf dem viskoelastischen Träger partiell oder vollflächig vorzugsweise ein- und besonders bevorzugt beidseitig eine Klebemasse oder unterschiedliche Klebemassen aufgebracht sind. Dies kann zum Beispiel durch Beschichtung des Trägers mit einer Masse oder umgekehrt oder durch Kaschierung (Laminierung) erfolgen.

Eine bevorzugte Ausführungsform des erfindungsgemäßen Gegenstandes ist ein viskoelastischer Träger, der von sich aus haftklebende Eigenschaften aufweist und daher nicht mit einer Klebemasse versehen werden muss.

In einer weiteren bevorzugten Ausführungsform des Erfindungsgegenstandes wird dieser außen einseitig oder vorzugsweise beidseitig mit einer Haftklebemasse, besonders bevorzugt aus Acrylat, kaschiert oder beschichtet. Geeignete Haftklebemassen sind auf Basis von Natur- oder Synthesekautschuk (zum Beispiel Styrolblockcopolymere, SBR oder Polyisobutylen), Silikon und vorzugsweise Acrylat und können aus Lösung, aus Dispersion und vorzugsweise aus der Schmelze aufgetragen werden. Sie können Klebharze, Weichmacher und sonstige Additive enthalten, wie sie oben für den viskoelastischen Träger beschrieben enthalten.

Der Träger kann auch ein- oder beidseitig mit einer siegelfähigen Masse versehen werden.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Das erfindungsgemäße Klebeband zeigt derart hervorragende Eigenschaften, dass sie für den Fachmann nicht vorstellbar waren, so dass dessen Verwendung insbesondere als Montageklebeband für Hochleistungsanforderungen möglich ist. Aufgrund der hohen Flexibilität des Trägers passt sich das Klebeband sehr gut unebenen Untergründen an. Es entsteht eine dauerhafte Verbindung zwischen Klebeband und Untergrund, die auch bei hohen Scherkräften und Biegemomentbeanspruchungen und selbst bei erhöhten Temperaturen und auch nach Belastung durch UV-Strahlung oder Feuchte nicht versagt.

Verwendet werden kann ein derartiges Klebeband zum Beispiel in der Automobil-, Bau-oder Möbelindustrie, wo Spiegel, Leisten, Embleme oder Blenden dauerhaft verklebt werden sollen. Wegen der hervorragenden Produkteigenschaften ist der Einsatz in vielen Industriebereichen als Montageklebeband vorteilhaft, wenn unterschiedliche Oberflächen, insbesondere UV-durchlässige wie Fensterglas oder transparente Kunststoffe dauerhaft miteinander zu verkleben sind. Der Träger kann auch hochtransparent sein, dafür liegt die Größe der Kristalle des Olefinpolymers vorzugsweise unter 100 nm. Ein solches Olefinpolymer kann mit einem Metallocenkatalysator auf Zirkonbasis hergestellt werden. Der Träger weist dann vorzugsweise einen Haze-Wert, gemessen nach ASTM D 1003, von unter 8 auf (gemessen an 2 mm dicken Presslingen in Cyclohexanol).

Im Folgenden wird die Erfindung durch einige Beispiele näher erläutert, ohne die Erfindung damit einschränken zu wollen.

### Prüfmethoden:

Prüfklima: 23 °C +/- 1 °C und 50 % +/- 5 % rel. Luftfeuchte.

### 90° Klebkraft Stahl und PE

Die Bestimmung der Klebkraft Stahl und PE erfolgt bei einem Prüfklima von 23 °C +/- 1 °C Raumtemperatur und 50 % +/- 5 % rel. Luftfeuchte. Die Muster werden auf 20 mm Breite zugeschnitten und auf eine Stahlplatte aus VA-Stahl (Stahl DIN EN 10088-2, Typ 1.4301, Ausführungsart 2R, Rautiefe 30 bis 60 nm, Firma Thyssen-Krupp) beziehungsweise auf eine PE-Platte (HDPE, PE-13A3, Firma Thyssen) geklebt. Die Prüfplatten müssen vor der Messung gereinigt und konditioniert werden. Dazu wird die Stahl-Platte zunächst mit Aceton abgewischt und danach 5 Minuten an der Luft liegen gelassen, damit das Lösungsmittel abdampfen kann. Die PE-Prüfplatte wird mit Ethanol gereinigt und 5 h im Klimaraum getrocknet.
Die dem Prüfuntergrund abgewandte Seite des Tapes wird mit einer 36 µm geätzten Polyesterfolie abgedeckt, was verhindert, dass sich das Muster bei der Messung dehnt. Danach erfolgte das Anrollen des Prüfmusters auf die Prüfplatte. Hierzu wird das Klebeband mit einer 2 kg Rolle bei einer Aufrollgeschwindigkeit von 10 m/min 5-mal hin und her überrollt. Unmittelbar nach dem Anrollen wird die Stahlplatte in eine spezielle Halterung geschoben, die es ermöglicht, das Muster in einem Winkel von 90 °C senkrecht nach oben abzuziehen. Die Klebkraftmessung erfolgt bei einer Messgeschwindigkeit von 300 mm/min mit einer elektronischen Zugprüfmaschine.
Das Messergebnis wird aus drei Messungen gemittelt und in N/cm angegeben

### L-jig Test

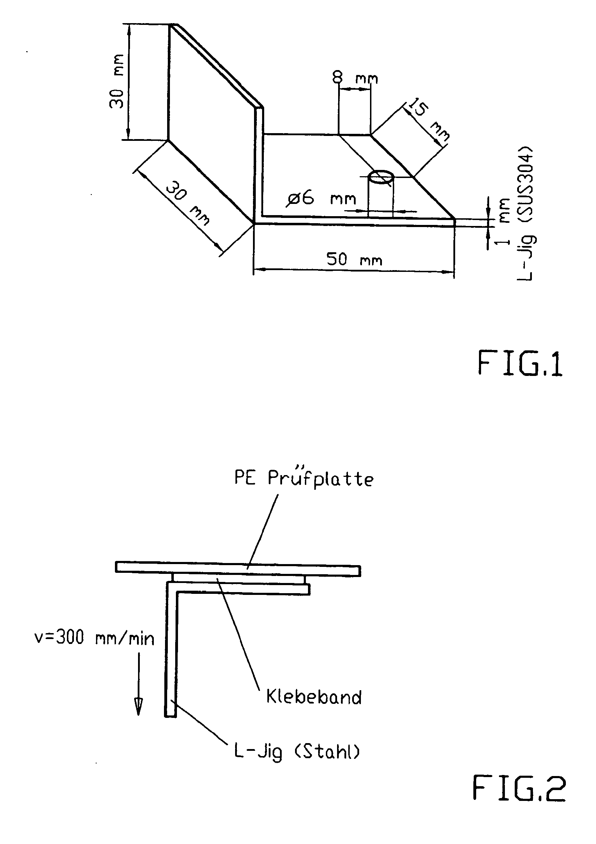

Von zu prüfendem Klebeband werden 5 Prüfmuster quadratisch mit einer Kantenlänge von 25 mm zugeschnitten. Die PE-Prüfplatten aus HDPE (wie oben beschrieben) werden mit Ethanol gereinigt und 5 h im Klimaraum getrocknet. Die L-Jigs (Stahl DIN EN 10088-2, Stahl Typ 1.4301, X 5 CrNi 18-10, Thyssen-Krupp) werden für 30 Minuten in Aceton gelagert und danach auf der zu verklebenden Seite mit einem Aceton getränkten Lappen mehrmals abgewischt. Abschließend dunsten diese für 10 Minuten ab. Die Prüfmuster werden mit der nicht zu prüfenden Seite auf den L-Jig geklebt. Dabei ist darauf zu achten, dass die eine Verklebungsseite mit dem freien Ende des L-Jig abschließt. Dann wird der L-Jig, wie in den Figuren 1 und 2 gezeigt, mittig auf die vorgegebene PE-Prüfplatte geklebt.

Die L-Jigs werden mit einer Andruckkraft von 60 N für 5 Sekunden verpresst. Danach werden die Prüfkörper für die vorgegebene Aufziehzeit von 3 Tagen bei 40 °C temperiert. Die so vorbereiteten Muster werden mit Hilfe einer Zugprüfmaschine mit 300mm/min bei Raumtemperatur dynamisch ausgeprüft.
Dabei soll sich die Verklebung adhäsiv zwischen Prüfplatte und Klebeband trennen. Die dabei gemessene Maximalkraft wird als Ergebnis in N/25mm angegeben. Der Mittelwert wird aus 5 Einzelergebnissen berechnet.

### Probe Tack

Mit der Probe-Tack-Methode wird das Klebverhalten eines beidseitig klebenden Klebebandes mittels eines "Texture Analyser TA.XT2i" von Stable Mikro Systems charakterisiert.
Bei der Methode wird eine Sonde mit zylindrischem Stempel aus Stahl mit vorgegebener Testgeschwindigkeit bis zu einer definierten Andruckkraft senkrecht auf die Klebmasse gefahren und nach einer definierten Kontaktzeit wieder mit ebenfalls vorgegebener Geschwindigkeit abgezogen. Während dieses Vorganges wird die zum Andrücken beziehungsweise Ablösen aufgewendete Kraft als Funktion des Weges registriert.
◆ Gerät:
   Texture Analyser TA.XT2i von SMS (Stable Micro Systems Ltd.) oder
   Texture Analyser TA.XT plus von SMS (Stable Micro Systems Ltd.) Messkopf / Kraftsonde: 5 kg mit Messbereich: 0,001 bis 50 N
◆ Tackstempel:
   Standard: Zylinder (rostfreier Stahl): ∅ 2 mm
◆ Prüfklima:
   Standard: 23 ± 1 °C / 50 ± 5 % rel. Feuchte

Zunächst wird die Prüfplatte mit polierter Edelstahloberfläche mit Aceton gereinigt und anschließend für ca. 30 Minuten bei RT konditioniert. Dann wird die Probe blasenfrei und definiert durch 3-faches Hin- und Herrollen einer 2 kg-Rolle mit 150 mm/s auf der glatten und vorgereinigten Seite der Stahlplatte verklebt. Zum Aufziehen des Klebstreifens auf das Substrat wird die Platte anschließend für 12 Stunden im Klimaraum bei 23 °C und 50 % rel. Feuchtigkeit gelagert. Dabei muss die zu messende Oberfläche mit einem silikonisierten Trennpapier abgedeckt sein. Auch der Stahlstempel wird in Aceton gereinigt und für 30 Min bei RT konditioniert. Das Trennpapier wird erst unmittelbar vor der Messung vom Klebstreifen entfernt.
Die Stahlplatte wird in dem Probentisch festgeschraubt und unter dem Stempel justiert.

Die zu wählenden Prüfparameter sind folgende:
◆ Tackstempel: Zylinder (VA-Stahl): ∅ 2 mm
◆ Vorgeschwindigkeit (Pre-test Speed): 0,1 mm/s
◆ Testgeschwindigkeit (Test Speed): 0,1 mm/s
◆ Trigger Force: 0,05 N
◆ Datendichte: 400 pps
◆ Abzugsgeschwindigkeit (Post Test Speed): 1,5 mm/s
◆ Kontaktzeit (Time): 5 sek
◆ Andruckkraft (Force): 5 N

Vor jeder Einzelmessung muss der Probentisch unter der Sonde positioniert und festgeschraubt werden. Der Abstand zwischen den Messorten beträgt das Dreifache des Durchmessers des Stempels.

Je Probe werden 10 Einzelmessungen zur Berechnung des Mittelwerts durchgeführt. Zwischen den Einzelmessungen wird der Stempel in der Regel nicht gereinigt, es sei denn, es treten Ablagerungen am Stempel auf, oder die Messreihe zeigt einen deutlichen Trend. Es erfolgt eine Mittelwertbildung aus den vorgenommenen Messungen.
Aus der Messkurve (graphische Darstellung der Kraft [N] als Funktion des Weges [mm]) wird die Maximalkraft bestimmt, dieser Wert wird als Probe Tack bezeichnet.

### Rohstoffe der Beispiele:

| | |
|---|---|
| IN FUSE 9107: | Copolymer aus Ethylen und Octen-(1), Schmelzindex 1 g/10min, Dichte 0,866 g/cm³, Biegemodul 15,5 MPa, Kristallitschmelzpunkt 121 °C |
| IN FUSE 9507: | Copolymer aus Ethylen und Octen-(1), Schmelzindex 5 g/10min, Dichte 0,866 g/cm³, Biegemodul 13,9 MPa, Kristallitschmelzpunkt 119 °C |
| Softell CA02: | Copolymer aus Propylen und Ethylen, Schmelzindex 0,6 g/10min, Dichte 0,870 g/cm³, Biegemodul 20 MPa, Kristallitschmelzpunkt 142 °C, Schmelzwärme 9,9 J/g |
| NOTIO PN-0040: | Copolymer aus Propylen und Buten-(1) (evtl. mit geringen Mengen auch an Ethylen), Schmelzindex 4 g/10min, Dichte 0,868 g/cm³, Biegemodul 42 MPa, Kristallitschmelzpunkt 159 °C, Schmelzwärme 5,2 J/g |
| Engage 7467: | Copolymer aus Ethylen und Buten-(1), Schmelzindex 1,2 g/10min Dichte 0,862 g/cm³, Biegemodul 4 MPa, Kristallitschmelzpunkt 34 °C |
| LD 251: | LDPE, Schmelzindex 8 g/10min, Dichte 0,9155 g/cm³, Biegemodul 180 MPa, Kristallitschmelzpunkt 104 °C |
| Ondina 933: | Weißöl (paraffinisch-naphthenisches Mineralöl) |
| Wingtack 10: | flüssiges C₅-Kohlenwasserstoffharz |
| Indopol H-100: | Polyisobuten-Polybuten-Copolymer mit einer kinematischen Viskosität von 210 cSt bei 100 °C nach ASTM D 445 |
| PB 0300 M: | Polybuten, Schmelzindex 4 g/10min, Dichte 0,915 g/cm³, Biegemodul 450 MPa, Kristallitschmelzpunkt 116 °C |
| Escorez 1310: | nicht hydriertes C₅-Kohlenwasserstoffharz, Schmelzpunkt von |
| | 94 °C, Polydispersität 1,5 |
| Dertophene DT 110: | Terpenphenolharz, Schmelzpunkt 115 °C, Polydispersität 1,4 |
| Wingtack extra: | aromatenmodifiertes C₅-Kohlenwasserstoffharz, Schmelzpunkt 97 °C, Polydispersität 1,6 |
| Regalite R1100: | hydriertes aromatisches Kohlenwasserstoffharz, Schmelzpunkt 100 °C, Polydispersität 1,9 |
| Foral 85: | voll hydrierter Glycerinester des Kolophoniums mit einem Schmelzpunkt von 85 °C und einer Polydispersität von 1,2 |
| Irganox 1726: | phenolisches Antioxidans mit schwefelbasierter Funktion eines sekundären Antioxidans |
| Irganox 1076: | phenolisches Antioxidans |
| Tinuvin 111: | HALS-Lichtschutzmittel |
| Q-Cel 5025: | Glashohlkugeln |

### Beispiel 1

Der Träger besteht aus folgenden Komponenten:

| | |
|---|---|
| 100 phr | NOTIO PN-0040, |
| 78,4 phr | Ondina 933, |
| 212 phr | Escorez 1310, |
| 2 phr | Irganox 1726. |

Die Mischung wird in einem Extruder kontinuierlich hergestellt und mit 900 g/m² mittels Walzenauftragswerks auf einen Prozessliner aufgetragen. Vor dem Aufwickeln wird ein zweiter Prozessliner einkaschiert. Der viskoelastische Träger ist hinreichend klebrig um klebtechnische Daten zu ermitteln (siehe unten). Anschließend werden die Prozessliner auskaschiert und der viskoelastische Träger mit einen im Produkt verbleibenden Liner kaschiert.

### Beispiel 2

Die Herstellung erfolgt wie in Beispiel 1, jedoch hat der Träger folgende Rezeptur:

| | |
|---|---|
| 100 phr | NOTIO PN-0040, |
| 78,4 phr | Wingtack 10, |
| 212 phr | Foral 85, |
| 2 phr | Irganox 1076. |

### Beispiel 3

Die Herstellung erfolgt wie in Beispiel 1, jedoch hat der Träger folgende Rezeptur:

| | |
|---|---|
| 100 phr | IN FUSE 9107, |
| 78,4 phr | Ondina 933, |
| 212 phr | Dertophene DT 110, |
| 2 phr | Irganox 1076. |

### Beispiel 4

Die Herstellung erfolgt wie in Beispiel 1, jedoch hat der Träger folgende Rezeptur:

| | |
|---|---|
| 100 phr | IN FUSE 9507, |
| 78,4 phr | Wingtack 10, |
| 212 phr | Escorez 1310, |
| 2 phr | Irganox 1076. |

### Beispiel 5

Die Herstellung erfolgt wie in Beispiel 1, jedoch hat der Träger folgende Rezeptur:

| | |
|---|---|
| 100 phr | IN FUSE 9107, |
| 78,4 phr | Ondina 933, |
| 212 phr | Wingtack extra, |
| 2 phr | Irganox 1076. |

### Beispiel 6

Die Herstellung erfolgt wie in Beispiel 1, jedoch hat der Träger folgende Rezeptur:

| | |
|---|---|
| 100 phr | Softell CA02A, |
| 70 phr | Indopol H-100, |
| 200 phr | Regalite R1100, |
| 2 phr | Irganox 1726. |
| 15 phr | Q-Cel 5025 |
| 1 phr | Tinuvin 111 |

Der Träger wird von beiden Seiten mit Elektronenstrahlen vernetzt (Dosis 20 kGy, Spannung 350 kV).

### Beispiele 7 bis 11

Der Produktaufbau entspricht den Beispielen 1 bis 5, jedoch wird der Träger beidseitig mit je 100 g/m² einer Acrylatmasse kaschiert. Beim Beispiel 7 wird der Träger gemäß Beispiel 1 vor dem Kaschieren zusätzlich mit einer 2 µm dicken Sperrschicht aus Polyamidlack versehen.

Die Acrylatmasse wird wie folgt hergestellt:
Ein für radikalische Polymerisationen konventioneller Reaktor wird mit 45 kg 2-Ethylhexylacrylat, 45 kg n-Butylacrylat, 5 kg Methylacrylat, 5 kg Acrylsäure und 66 kg Aceton/Isopropanol (92,5:7,5) befüllt. Nach 45minütiger Durchleitung von Stickstoffgas unter Rühren wird der Reaktor auf 58 °C hochgeheizt und 50 g AIBN hinzugegeben. Anschließend wird das äußere Heizbad auf 75 °C erwärmt und die Reaktion konstant bei dieser Außentemperatur durchgeführt. Nach 1 h werden erneut 50 g AIBN zugegeben und nach 4 h wird mit 20 kg Aceton/Isopropanol Gemisch verdünnt. Nach 5 sowie nach 7 h wird jeweils mit 150 g Bis-(4-tert-butylcyclohexyl)-peroxydicarbonat nachinitiiert. Nach 22 h Reaktionszeit wird die Polymerisation abgebrochen und auf Raumtemperatur abgekühlt. Das Polyacrylat hat einen Umsatz von 99,6 %, einen K-Wert von 59, einen Feststoffgehalt von 54 %, ein mittleres Molekulargewicht von M_{w} = 557.000 g/mol, Polydispersität PD (M_{w}/Mₙ) = 7,6. Die Acrylatpolymerlösung wird mit einem Extruder im Vakuum vom Lösungsmittel befreit und in einem zweiten Schritt im Verhältnis 70 Gewichtsteilen Acrylatpolymer und 30 Gewichtsteilen Dertophene DT 1100 sowie einem Epoxyvernetzer und einem Aminbeschleuniger abgemischt.

### Vergleichsbeispiel 1

3M PT 1100, mehrschichtiges Polyacrylat mit Glashohlkugeln in einer Innenschicht, Außenschichten aus Polyacrylat und Klebharz

### Vergleichsbeispiel 2

Nitto Hyper Joint 9008, 1-schichtiges Polyacrylat mit Glashohlkugeln

### Vergleichsbeispiel 3

3M 4950, 3-schichtiges Polyacrylat mit Glashohlkugeln in der Innenschicht, Außenschichten aus Polyacrylat

### Vergleichsbeispiel 4

3M 4910, 1-schichtiges Polyacrylat ohne Glashohlkugeln

### Vergleichsbeispiel 5

3M GT 6008, 1-schichtiges Polyacrylat mit Glashohlkugeln

### Vergleichsbeispiel 6

Die Herstellung erfolgt wie in Beispiel 5, jedoch wird IN FUSE 9107 durch LD 251 ersetzt.

### Vergleichsbeispiel 7

Die Herstellung erfolgt wie in Beispiel 5, jedoch wird IN FUSE 9107 durch Engage 7467 ersetzt. Die Beschichtung ist sehr weich und klebrig wie ein Fliegenfänger. Eine Klebkraftmessung ist wegen Kohäsionsbruch nicht möglich.

### Vergleichsbeispiel 8

Die Herstellung erfolgt wie in Beispiel 5, jedoch wird Ondina 933 durch PB 0300 M ersetzt. Die Beschichtung ist kaum klebrig und nicht elastisch.

### Übersicht der Ergebnisse

| Beispiel | ProbeTack | Klebkraft 90° auf Stahl | Klebkraft 90° auf PE | L-Jig PE |
|---|---|---|---|---|
| | [N] | [N/cm] | [N/cm] | [N/25mm] |
| 1 | 4,9 | 33 | 22 | 202 |
| 2 | 9,9 | >50 | 30 | 296 |
| 3 | 5,6 | - | - | 297 |
| 4 | 8,2 | >50 | - | 322 |
| 5 | 4,3 | >50 | 29 | 266 |
| 6 | 5,2 | >50 | - | 210 |
| 7 | - | 33 | - | 155 |
| 8 | - | 30 | 17 | 176 |
| 9 | - | 34 | 12 | 185 |
| 10 | - | 31 | - | 169 |
| 11 | - | >50 | - | 170 |

| Vergleichsbeispiel | Probe Tack | Klebkraft 90° auf Stahl | Klebkraft 90° auf PE | L-Jig PE |
|---|---|---|---|---|
| | [N] | [N/cm] | [N/cm] | [N/25mm] |
| 1 | 2,5 | 24 | 3 | 146 (Träger spaltet) |
| 2 | 2,0 | 16 | 1 | - |
| 3 | 1,4 | 12 | 2 | - |
| 4 | 1,2 | 12 | 2 | - |
| 5 | 1,2 | 11 | 0,7 | 83 |

## Patentansprüche

1. Klebeband mit einem viskoelastischen Träger
aus einem Olefinpolymer mit einer Dichte zwischen 0,86 und 0,89 g/cm³ und einem Kristallitschmelzpunkt von mindestens 105 °C und
aus einem Klebharz, wobei der Anteil 130 bis 350 phr beträgt,
wobei das Olefinpolymer Propylen oder Ethylen und mindestens ein weiteres Comonomer enthält, ausgewählt aus den C₂- bis C₁₀-Olefinen.

2. Klebeband nach Anspruch 1,
**dadurch gekennzeichnet, dass**
die Dichte des Olefinpolymers zwischen 0,86 und 0,88 g/cm³, bevorzugt zwischen 0,86 und 0,87 g/cm³ liegt und/oder das Olefinpolymer einen Kristallitschmelzpunkt von mindestens 105 °C, vorzugsweise mindestens 115 °C, besonders bevorzugt mindestens 135 °C aufweist.

3. Klebeband nach Anspruch 1 oder 2,
**dadurch gekennzeichnet, dass**
das Olefinpolymer einen Schmelzindex von weniger als 8 g/10 min, vorzugsweise weniger als 1,5 g/10 min aufweist und/oder
einen Biegemodul von weniger als 50 MPa, vorzugsweise weniger als 26 MPa und besonders bevorzugt weniger als 17 MPa aufweist.

4. Klebeband nach zumindest einem der vorherigen Ansprüche,
**dadurch gekennzeichnet, dass**
das Olefinpolymer Propylen oder Ethylen und mindestens ein weiteres Comonomer enthält, ausgewählt aus den C₂- bis C₁₀-α-Olefinen, bevorzugt ein Copolymer aus Propylen und Ethylen, Propylen und Buten-(1) oder Ethylen und Octen-(1) oder ein Terpolymer aus Ethylen, Propylen und Buten-(1).

5. Klebeband nach zumindest einem der vorherigen Ansprüche,
**dadurch gekennzeichnet, dass**
der Träger enthält
- ein primäres Antioxidans, vorzugsweise in einer Menge von mindestens 2 phr, besonders bevorzugt mindestens 6 phr und/oder
- ein sekundäres Antioxidans in einer Menge von 0 bis 5 phr, vorzugsweise in einer Menge von 0,5 bis 1 phr und/oder
- ein Lichtschutzmittel vorzugsweise ein HALS und/oder
- einen UV-Absorber.

6. Klebeband nach zumindest einem der vorherigen Ansprüche,
**dadurch gekennzeichnet, dass**
der Träger ein Klebharz enthält, welches vorzugsweise eine Polydispersität von weniger als 2,1, vorzugsweise weniger als 1,8, besonders bevorzugt weniger als 1,6, ganz besonders bevorzugt zwischen 1,0 und 1,4 aufweist.

7. Klebeband nach zumindest einem der vorherigen Ansprüche,
**dadurch gekennzeichnet, dass**
das Klebharz gewählt ist aus der Gruppe
- der Harze auf Basis von Kolophonium oder Kolophoniumderivaten vorzugsweise partiell oder vollständig hydriert,
- der Kohlenwasserstoffharze auf Basis von C₅-Monomeren, vorzugsweise partiell oder vollständig hydriert,
- der Kohlenwasserstoffharze aus Hydrierung von aromatenhaltigen Kohlenwasserstoffharzen,
- der Kohlenwasserstoffharze auf Basis von hydrierten Cyclopentadien-Polymeren, und/oder
- der Harze auf Basis von Polyterpenen, vorzugsweise partiell oder vollständig hydriert,
- der Terpenphenolharze,
wobei die Menge an Klebharz in der Klebemasse bevorzugt 200 bis 240 phr beträgt.

8. Klebeband nach zumindest einem der vorherigen Ansprüche,
**dadurch gekennzeichnet, dass**
der Träger einen Weichmacher enthält gewählt aus der Gruppe der Mineralöle, der flüssigen Polymerisate aus Isobutenhomopolymer und/oder Isobuten-Buten-Copolymer und der Ester der Phthal-, Trimellit-, Zitronen- oder Adipinsäure.

9. Klebeband nach zumindest einem der vorherigen Ansprüche,
**dadurch gekennzeichnet, dass**
der Träger ein Copolymer oder ein Terpolymer aus Ethylen, Propylen, Buten-(1), Hexen-(1) und/oder Octen-(1) enthält, wobei der Biegemodul des Copolymers oder Terpolymers vorzugsweise unter 20 MPa und/oder der Kristallitschmelzpunkt vorzugsweise unter 50 °C liegt und/oder die Dichte zwischen 0,86 und 0,87 g/cm³ liegen, oder ein EPDM enthält, vorzugsweise mit einem Ethylengehalt von 40 bis 70 Gew.-% und/oder einer Dichte unter 0,88 g/cm³, besonders bevorzugt unter 0,87 g/cm³, wobei die Menge an Copolymer oder Terpolymer vorzugsweise über 100 phr beträgt.

10. Klebeband nach zumindest einem der vorherigen Ansprüche,
**dadurch gekennzeichnet, dass**
der Träger eine Dicke zwischen 100 und 5000, vorzugsweise zwischen 500 und 3000 und besonders bevorzugt zwischen 800 und 1200 µm hat.

11. Klebeband nach zumindest einem der vorherigen Ansprüche,
**dadurch gekennzeichnet, dass**
der Träger mit keiner Haftklebemasse versehen ist oder
der Träger außen einseitig oder vorzugsweise beidseitig mit einer Haftklebemasse besonders bevorzugt aus Acrylat versehen ist.

12. Klebeband nach zumindest einem der vorherigen Ansprüche,
**dadurch gekennzeichnet, dass**
die Klebkraft 90° auf Polyethylen mindestens 5 N/cm, vorzugsweise mindestens 10 N/cm, besonders bevorzugt mindestens 15 N/cm und/oder auf Stahl mindestens 20 N/cm, vorzugsweise mindestens 30 N/cm, besonders bevorzugt mindestens 50 N/cm beträgt.

13. Klebeband nach zumindest einem der vorherigen Ansprüche,
**dadurch gekennzeichnet, dass**
der Probe Tack des Klebebandes mindestens 2 N, vorzugsweise mindestens 4 N, besonders bevorzugt mindestens 5 N und/oder der Wert des L-Jig-Testes auf Polyethylen mindestens 100 N/25 mm, vorzugsweise mindestens 200 N/25 mm beträgt.

14. Verwendung eines Klebebandes nach mindestens einem der vorherigen Ansprüche als Montageklebeband.

## Claims

1. Adhesive tape having a viscoelastic carrier
comprising an olefin polymer having a density of between 0.86 and 0.89 g/cm³ and a crystallite melting point of at least 105°C and comprising a tackifier resin, the content being 130 to 350 phr,
the olefin polymer comprising propylene or ethylene and at least one further comonomer selected from C₂ to C₁₀ olefins.

2. Adhesive tape according to Claim 1,
**characterized in that**
the density of the olefin polymer is between 0.86 and 0.88 g/cm³, preferably between 0.86 and 0.87 g/cm³, and/or the olefin polymer has a crystallite melting point of at least 105°C, preferably at least 115°C, more preferably at least 135°C.

3. Adhesive tape according to Claim 1 or 2,
**characterized in that**
the olefin polymer has a melt index of less than 8 g/10 min, preferably less than 1.5 g/10 min, and/or
has a flexural modulus of less than 50 MPa, preferably less than 26 MPa, and more preferably less than 17 MPa.

4. Adhesive tape according to at least one of the preceding claims,
**characterized in that**
the olefin polymer comprises propylene or ethylene and at least one further comonomer selected from C₂ to C₁₀ α-olefins, preferably a copolymer of propylene and ethylene, of propylene and but-1-ene or of ethylene and oct-1-ene, or a terpolymer of ethylene, propylene and but-1-ene.

5. Adhesive tape according to at least one of the preceding claims,
**characterized in that**
the carrier comprises
- a primary antioxidant, preferably in an amount of at least 2 phr, more preferably at least 6 phr, and/or
- a secondary antioxidant in an amount of 0 to 5 phr, preferably in an amount of 0.5 to 1 phr, and/or
- a light stabilizer, preferably a HALS, and/or
- a UV absorber.

6. Adhesive tape according to at least one of the preceding claims,
**characterized in that**
the carrier comprises a tackifier resin which preferably has a polydispersity of less than 2.1, preferably less than 1.8, more preferably less than 1.6, very preferably between 1.0 and 1.4.

7. Adhesive tape according to at least one of the preceding claims,
**characterized in that**
the tackifier resin is selected from the group
- of resins based on rosin or rosin derivatives preferably partially or completely hydrogenated,
- of hydrocarbon resins based on C₅ monomers, preferably partially or completely hydrogenated,
- of hydrocarbon resins from hydrogenation of aromatics-containing hydrocarbon resins,
- of hydrocarbon resins based on hydrogenated cyclopentadiene polymers, and/or
- of resins based on polyterpenes, preferably partially or completely hydrogenated,
- of terpene-phenolic resins,
the amount of tackifier resin in the adhesive being preferably 200 to 240 phr.

8. Adhesive tape according to at least one of the preceding claims,
**characterized in that**
the carrier comprises a plasticizer selected from the group of mineral oils, of liquid polymers of isobutene homopolymer and/or isobutene-butene copolymer, and of esters of phthalic, trimellitic, citric or adipic acid.

9. Adhesive tape according to at least one of the preceding claims,
**characterized in that**
the carrier comprises a copolymer or a terpolymer of ethylene, propylene, but-1-ene, hex-1-ene and/or oct-1-ene, the flexural modulus of the copolymer or terpolymer being preferably below 20 MPa and/or the crystallite melting point being preferably below 50°C, and/or the density being between 0.86 and 0.87 g/cm³, or comprises an EPDM, preferably having an ethylene content of 40% to 70% by weight and/or a density below 0.88 g/cm³, more preferably below 0.87 g/cm³, the amount of copolymer or terpolymer being preferably above 100 phr.

10. Adhesive tape according to at least one of the preceding claims,
**characterized in that**
the carrier has a thickness of between 100 and 5000, preferably between 500 and 3000, and more preferably between 800 and 1200 µm.

11. Adhesive tape according to at least one of the preceding claims,
**characterized in that**
the carrier is not provided with any pressure-sensitive adhesive, or the carrier is provided externally on one side or preferably on both sides with a pressure-sensitive adhesive, more preferably comprising acrylate.

12. Adhesive tape according to at least one of the preceding claims,
**characterized in that**
the 90° bond strength to polyethylene is at least 5 N/cm, preferably at least 10 N/cm, more preferably at least 15 N/cm, and/or to steel is at least 20 N/cm, preferably at least 30 N/cm, more preferably at least 50 N/cm.

13. Adhesive tape according to at least one of the preceding claims,
**characterized in that**
the probe tack of the adhesive tape is at least 2 N, preferably at least 4 N, more preferably at least 5 N and/or the value in the L-jig test on polyethylene is at least 100 N/25 mm, preferably at least 200 N/25 mm.

14. Use of an adhesive tape according to at least one of the preceding claims as an adhesive assembly tape.

## Revendications

1. Bande adhésive présentant un support viscoélastique en un polymère oléfinique présentant une densité entre 0,86 et 0,89 g/cm³ et un point de fusion des cristaux d'au moins 105°C et en une résine adhésive, à une proportion de 130 à 350 parties par cent parties,
le polymère oléfinique contenant du propylène ou de l'éthylène et au moins un autre comonomère, choisi parmi les C₂-C₁₀-oléfines.

2. Bande adhésive selon la revendication 1, **caractérisée en ce que** la densité du polymère oléfinique se situe entre 0,86 et 0,88 g/cm³, de préférence entre 0,86 et 0,87 g/cm³ et/ou le polymère oléfinique présente un point de fusion des cristaux d'au moins 105°C, de préférence d'au moins 115°C, de manière particulièrement préférée d'au moins 135°C.

3. Bande adhésive selon la revendication 1 ou 2, **caractérisée en ce que** le polymère oléfinique présente un indice de fusion inférieur à 8 g/10 min, de préférence inférieur à 1,5 g/10 min et/ou présente un module de flexion inférieur à 50 MPa, de préférence inférieur à 26 MPa et de manière particulièrement préférée inférieur à 17 MPa.

4. Bande adhésive selon au moins l'une quelconque des revendications précédentes, **caractérisée en ce que** le polymère oléfinique contient du propylène ou de l'éthylène et au moins un autre comonomère, choisi parmi les C₂-C₁₀-α-oléfines, de préférence un copolymère de propylène et d'éthylène, de propylène et de butène-(1) ou d'éthylène et d'octène-(1) ou un terpolymère d'éthylène, de propylène et de butène-(1).

5. Bande adhésive selon au moins l'une quelconque des revendications précédentes, **caractérisée en ce que** le support contient
- un antioxydant primaire, de préférence en une quantité d'au moins 2 parties par cent parties, de manière particulièrement préférée d'au moins 6 parties par cent parties et/ou
- un antioxydant secondaire en une quantité de 0 à 5 parties par cent parties, de préférence en une quantité de 0,5 à 1 partie par cent parties et/ou
- un agent de protection contre la lumière, de préférence un HALS et/ou
- un absorbant des UV.

6. Bande adhésive selon au moins l'une quelconque des revendications précédentes, **caractérisée en ce que** le support contient une résine adhésive, qui présente de préférence une polydispersité inférieure à 2,1, de préférence inférieure à 1,8, de manière particulièrement préférée inférieure à 1,6, de manière tout particulièrement préférée entre 1,0 et 1,4.

7. Bande adhésive selon au moins l'une quelconque des revendications précédentes, **caractérisée en ce que** la résine adhésive est choisie dans le groupe formé par
- les résines à base de colophonium ou de dérivés de colophonium, de préférence partiellement ou totalement hydrogénées,
- les résines hydrocarbonées à base de monomères en C₅, de préférence partiellement ou totalement hydrogénées,
- les résines hydrocarbonées provenant de l'hydrogénation de résines hydrocarbonées contenant des aromatiques,
- les résines hydrocarbonées à base de polymères hydrogénés de cyclopentadiène, et/ou
- les résines à base de polyterpènes, de préférence partiellement ou totalement hydrogénées,
- les résines de terpènephénol,
la quantité de résine adhésive dans la masse adhésive étant de préférence de 200 à 240 parties par cent parties.

8. Bande adhésive selon au moins l'une quelconque des revendications précédentes, **caractérisée en ce que** le support contient un plastifiant, choisi dans le groupe des huiles minérales, des polymères liquides d'homopolymère d'isobutène et/ou de copolymère d'isobutène-butène et des esters de l'acide phtalique, de l'acide trimellitique, de l'acide citrique ou de l'acide adipique.

9. Bande adhésive selon au moins l'une quelconque des revendications précédentes, **caractérisée en ce que** le support contient un copolymère ou un terpolymère d'éthylène, de propylène, de butène-(1), d'hexène-(1) et/ou d'octène-(1), le module de flexion du copolymère ou du terpolymère étant de préférence inférieur à 20 MPa et/ou le point de fusion des cristaux étant de préférence inférieur à 50°C et/ou la densité étant située entre 0,86 et 0,87 g/cm³, ou contient un EPDM, présentant de préférence une teneur en éthylène de 40 à 70% en poids et/ou une densité inférieure à 0,88 g/cm³, de manière particulièrement préférée inférieure à 0,87 g/cm³, la quantité de copolymère ou de terpolymère étant de préférence supérieure à 100 parties par cent parties.

10. Bande adhésive selon au moins l'une quelconque des revendications précédentes, **caractérisée en ce que** le support présente une épaisseur entre 100 et 5000, de préférence entre 500 et 3000 et de manière particulièrement préférée entre 800 et 1200 µm.

11. Bande adhésive selon au moins l'une quelconque des revendications précédentes, **caractérisée en ce que** le support n'est pas pourvu d'une masse autoadhésive ou le support est pourvu à l'extérieur, sur une face ou de préférence deux faces, d'une masse autoadhésive, de manière particulièrement préférée d'acrylate.

12. Bande adhésive selon au moins l'une quelconque des revendications précédentes, **caractérisée en ce que** l'adhésivité à 90° sur du polyéthylène est d'au moins 5 N/cm, de préférence d'au moins 10 N/cm, de manière particulièrement préférée d'au moins 15 N/cm et/ou sur de l'acier est d'au moins 20 N/cm, de préférence d'au moins 30 N/cm, de manière particulièrement préférée d'au moins 50 N/cm.

13. Bande adhésive selon au moins l'une quelconque des revendications précédentes, **caractérisée en ce que** l'épreuve d'adhérence ("Probe Tack") de la bande adhésive est d'au moins 2 N, de préférence d'au moins 4 N, de manière particulièrement préférée d'au moins 5 N et/ou la valeur du test sur le support en L sur du polyéthylène est d'au moins 100 N/25 mm, de préférence d'au moins 200 N/25 mm.

14. Utilisation d'une bande adhésive selon au moins l'une quelconque des revendications précédentes comme bande adhésive de montage.
